# NEUE EUROPÄISCHE PATENTSCHRIFT

(11) **EP 0 845 389 B2**
(45) Veröffentlichungstag und Bekanntmachung des Hinweises auf die Entscheidung über den Einspruch: **12.01.2005**
(45) Hinweis auf die Patenterteilung: 03.04.2002
(21) Anmeldenummer: 97120640.4
(22) Anmeldetag: 25.11.1997
(51) Int. Cl.: B60Q 1/14, B60Q 1/40

(54) **Modul-Lenkstockschalter**
Module steering column switch
Interrupteur de colonne de direction à module.

(30) Priorität: 02.12.1996 DE 19649912
(43) Veröffentlichungstag der Anmeldung: 03.06.1998
(73) Patentinhaber: TRW Automotive Electronics & Components GmbH & Co. KG, 78315 Radolfzell (DE)
(72) Erfinder: Stewart, Trevor, 78239 Rielasingen-Worblingen (DE); Hafner, Ernst, 88709 Hagnau (DE); Huber, Wolfgang, 78333 Wahlwies (DE)
(74) Vertreter: Eder, Thomas, Dr.-Ing.

(56) Entgegenhaltungen:
- EP-A- 0 645 280
- DE-A- 19 627 767
- FR-A- 2 749 240

## Beschreibung

Die Erfindung betrifft eine Lenkstockschalteinheit mit einem Gehäuse, gemäß dem Oberbegriff von Anspruch 1, in welchem zumindest ein Betätigungshebel schwenk- und/oder verschiebbar gehalten ist.

Solche bekannte Lenkstockschalteinheiten werden üblicherweise in Kraftfahrzeugen zur Steuerung bzw. Betätigung von Licht, Scheibenwischer, Blinker und ähnlichem verwendet, z.B. in einer vorbenutzten Schalterkombination der Firma kostal GmbH, Lüdenschied, geliefert für die FORD-Modelle "Escort" und "FIESTA" gemäß Zeichnungstyp 000015005.

Die zu steuernden Funktionen, wie z.B. zusätzlicher Heckscheibenwischer, Intervallschaltungen usw., hängen dabei von Fahrzeugtyp und Ausstattung ab. Da aus Gründen der Bedienerfreundlichkeit keine Leerschaltstellungen zumutbar sind, mussten Lenkstockschalteinheiten an den jeweils vorhandenen Funktionsumfang angepasst werden. Diese individuelle Anpassung erfolgte bisher beispielsweise durch Ausstausch von Kontakten, Platinen etc. und bedingte so einen unterschiedlichen Aufbau des Großteils der Lenkstockschalteinheit.

Der vorliegenden Erfindung liegt daher die Aufgabe zugrunde, eine kostengünstige Lenkstockschalteinheit zu schaffen, die eine Vielzahl von Funktions- und Anwendungsmöglichkeiten umfasst und gleichzeitig einen hohen Bedienerkomfort bietet.

Die Aufgabe wird erfindungsgemäß mit den Merkmalen des Anspruchs 1 gelöst.

Durch den modularen Aufbau einer Lenkstockschalteinheit, die sich je nach Anwendungsprofil nur durch unterschiedlich montierte Betätigungshebeltypen unterscheidet, können die Herstellungskosten durch den bis auf den Betätigungshebel gleichbleibenden Aufbau wesentlich gesenkt werden. Um trotzdem alle Anwendungsmöglichkeiten abzudecken, beinhaltet die Lenkstockschalteinheit im Gehäuse eine Gegenkontakteinrichtung, durch die alle möglichen Schaltfunktionen abgedeckt werden. Die in verschiedenen Fahrzeugtypen und je nach Ausstattung installierten Lenkstockschalteinheiten unterscheiden sich so nur noch durch unterschiedliche Betätigungshebel, die je nach Typ und Ausstattung eine bedienerfreundliche Auswahl des gesamten Funktionsumfangs gewährleisten.

Gemäß der Erfindung ist auch die mechanische Betätigung des Hebelweges an den jeweiligen Fahrzeugtyp angepasst Hierdurch entstehen bei Fahrzeugen mit geringeren Funktionen beispielsweise bei fehlendem Heckscheibenwischer keine unerwünschten langen Hebelwege oder Leerpositionen. Auch eventuelle fehlende Funktionen der radialen Stellungen bzw. Positionen des Betätigungshebels, wie z.B. fehlende Intervallschaltung eines Scheibenwischers oder fehlende weitere Stufen, können durch eine Begrenzung durch wenigstens einen Anschlag auf einen bestimmten Bereich der Rastkurve bedienerfreundlich ausgeglichen werden.

Dabei befindet sich die Rastkurve am Hebelende und das entsprechende Rastelement ortsfest im Gehäuse Bei dieser Anordnung ist zusätzlich durch eine Begrenzung durch Anschläge auch die Möglichkeit gegeben, durch einen einfachen Austausch eines Betätigungshebels die gesamte Rastkurvencharakteristik zu verändern.

In bevorzugterAusführungsform der Erfindung weist der Betätigungshebel vorzugsweise an seinem Endbereich zusätzlich eine Schalteinrichtung auf. Diese Schalteinrichtung, die beispielsweise aus Schaltern mit zwei oder mehr Stellungen, Potentiometern etc. besteht, ist über eine Verbindungsleitung mit einem sich am Montageende des Betätigungshebels befindlichen Stecker verbunden. Dieser Stecker kann dann im Gehäuse mit einer Anschlusseinrichtung verbunden werden, die die maximale Anzahl von möglichen Anschlüssen vollständig beinhaltet. So können nicht nur Betätigungshebel mit unterschiedlicher Schalteinrichtung mit derselben Anschlusseinrichtung verbunden werden, sondern auch Betätigungshebel mit gleicher Schalteinrichtung an verschiedene Anschlüsse der Anschlusseinrichtung angeschlossen werden. Vorteilhafterweise sind so eine Vielzahl von unterschiedlichen Funktionsmöglichkeiten zu realisieren.

Die Kontakt- und die entsprechende Gegenkontakteinrichtung, die zur Registrierung der Positionen des Betätigungshebels dienen, können bei der Lenkstockschalteinheit nach der Erfindung wie übliche elektromechanische oder elektrische Kontakte ausgebildet sein. Hierfür bieten sich im Stand der Technik eine Vielzahl von Realisierungsmöglichkeiten wie Schließen und Öffnen von elektrischen Kontakten, Leiterbahnen, Betätigung von Schaltern und Ähnliches an.

In der bevorzugten Ausführungsform der Erfindung ist die Kontakteinrichtung als wenigstens ein Magnet und die entsprechende Gegenkontakteinrichtung als mindestens ein Hallsensor ausgebildet. Diese Variante funktioniert vorteilhafterweise verschleißfrei ohne mechanische Reibung.

Bei einer weiteren Ausführungsform der Erfindung umfasst die Lenkstockschalteinheit im Gehäuse eine Auswerteeinheit mit vordefiniertem maximalen Funktionsumfang zur Umsetzung der Signale, Kontakte und/oder Schalteinrichtung in Steuersignale für entsprechende Fahrzeugfunktionen. Auf einer derartigen Auswerteeinrichtung könnten beispielsweise verschiedene Signale miteinander verknüpft werden. Denkbar ist auch die Umsetzung analoger Signale wie beispielsweise die Hallsensorwerte oder die Widerstandswerte von Schaltern, Drehschaltem und Potentiometern in Steuersignale, beispielsweise für einen Scheibenwischermotor, hierauf unterzubringen.

Zur Realisierung dieser elektronischen Aufgaben kann die Auswerteeinheit festverdrahtet oder aus programmierbaren Logikbausteinen aufgebaut sein, wobei selbst die Anwendung eines Mikroprozessors mit Firmware denkbar ist.

Die Auswahl des Gesamtfunktionsumfangs der Auswerteeinheit kann bei der Erfindung wiederum durch den jeweils montierten Hebel beeinflusst werden. Die bereits geschilderte Möglichkeit der unterschiedlichen Kontakteinrichtung, Anschlusseinrichtung sowie mechanischer Bewegungscharakteristik können hierbei zu einer bestimmten Auswahl des Gesamtfunktionsumfangs der Auswerteeinheit dienen. Es ist aber auch denkbar, zusätzlich am oder im Hebel eine Kennung anzuordnen, die als zusätzlicher mechanischer, elektrischer oder elektronischer Kontakt mit einem entsprechenden Gegenkontakt im Gehäuse zusammenwirkt und auf diesem Wege eine Auswahl des Funktionsumfangs der Auswerteeinheit trifft. Hierfür ist es auch denkbar, im oder am Hebel einen elektronischen Chip, ähnlich einem Telefonkartenchip, anzubringen, der über die Anschlusseinrichtung oder eine elektronische Abtasteinrichtung zur Auswahl des Funktionsumfangs der Auswerteeinheit dient.

Durch die vorliegende Erfindung können mittels Massenproduktion der bis auf den Betätigungshebel gleichbleibenden Einheit die Herstellungskosten wesentlich gesenkt werden, ohne den Bedienerkomfort einzuschränken. Unterschiedliche Betätigungshebel können vorteilhafterweise mittels genormter mechanischer und elektrischer Anschlusseinrichtungen bei der Montage in den übrigen Teil der Lenkstockschalteinheit eingesetzt werden. Hierbei ist es sogar möglich, mittels automatischer Erkennung, welcher Hebeltyp eingesetzt wurde, die genaue Funktion der Lenkstockschalteinheit bei der Herstellung der Hebel genau zu definieren.

Weitere Ausführungsformen der Erfindung ergeben sich aus den Unteransprüchen.

Die Erfindung wird nachfolgend anhand eines in der Zeichnung dargestellten Ausführungsbeispiels näher erläutert. In der Zeichnung zeigen:
- Fig. 1: eine Querschnittansicht einer Lenkstockschalteinheit mit montiertem Betätigungshebel;
- Fig. 2: eine Explosionszeichnung in perspektivischer Ansicht eines Betätigungshebels nach Fig. 1 vor der Montage und
- Fig. 3: eine Explosionszeichnung in perspektivischer Ansicht einer Ausfführungsform eines Betätigungshebels gemäß der Erfindung.

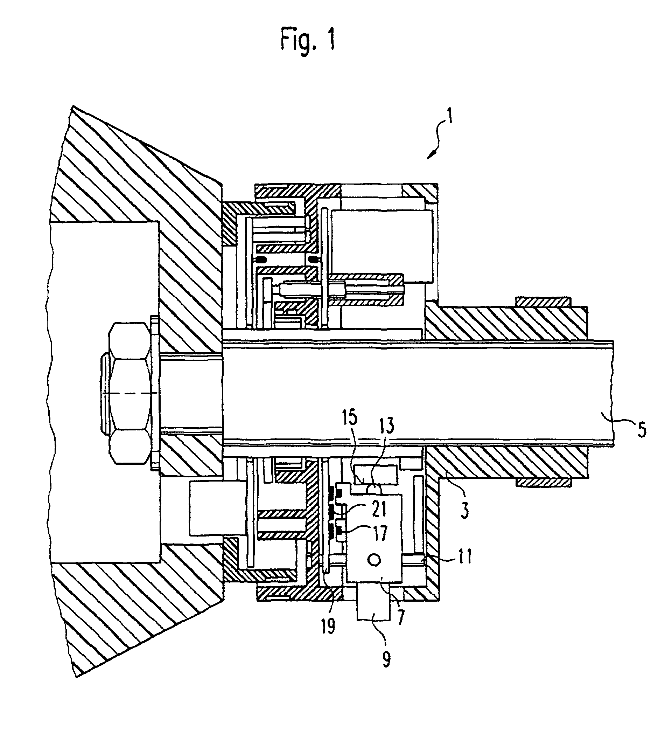

Bekannte Lenkstockschalteinheiten umfassen üblicherweise zwei oder drei Betätigungshebel für verschiedene Funktionen, wie für Blinker und Lichthupe, Scheibenwischerfunktionen und evtl. Licht. Die in Fig. 1 schematisch dargestellte Lenkstockschalteinheit 1 umfasst ein Gehäuse 3, das konzentrisch eine Lenksäule 5 eines Kraftfahrzeuges umgibt. Im Innenraum des Gehäuses 3 ist schematisch ein Kopf 7 eines einzelnen eingreifenden Betätigungshebels 9 dargestellt, ohne auf eventuelle andere vorhandene eingreifende Betätigungshebel näher einzugehen. Für solche weiteren Hebel gelten die folgenden Ausführungen für einen Betätigungshebel 9 deshalb entsprechend.

Der quer zur Längsachse der Lenksäule 5 angeordnete Betätigungshebel 9 ist über eine achsparallel zur Längsachse angeordnete Achse 11 in bekannter, nicht näher dargestellte Weise, in dem Gehäuse 3 in einer Ebene senkrecht zur Längsachse der Lenksäule 5 schwenkbar gelagert. Hierfür verwendbare dreidimensionale Lagerungsvorrichtungen, die Quer- und Längsschwenkbewegungen, sowie ein Herausziehen und Einschieben des Betätigungshebels erlauben, sind im Stand der Technik zur Genüge bekannt und werden hier, da nicht erfindungswesentlich, nur schematisch durch Lagerung der Achse 11 dargestellt.

Der Betätigungshebel 9 weist am stirnseitigen Ende seines Kopfes 7 ein Rastelement 13 auf, das in nicht näher dargestellter Weise in Richtung einer Rastkurve 15, beispielsweise mittels einer im Kopf 7 angeordneten Druckfeder, mit einer Kraft beaufschlagt wird. Der Kopf 7 des Betätigungshebels 9 weist an einer senkrecht zur Achse 11 liegenden Seitenwand sitzende (beispielsweise zwei) Magneten 17 auf. Diese Magneten 17 können, wie in Fig. 1 dargstellt, in unterschiedliche Abstände zur Achse 11 angeordnet sein, wobei sich selbstverständlich auch Magneten 17 mit gleichem Abstand zur Achse 11 nebeneinander entlang derselben Umfangslinie befinden können.

Gegenüber den Magneten 17 auf der Seitenwandung des Kopfes 7 befinden sich im Inneren des Gehäuses 3 Hallsensoren 21 auf einer zu der Seitenwandung co-planare und beabstandete Platine 19, so dass zwischen den Hallsensoren 21 und den Magneten 17 ein geringer Spielraum bleibt. Die Hallsensoren 19 sind in Zahl und Position (im Beispiel drei) bereits allen geplanten Betätigungshebeltypen mit unterschiedlicher Bewegungscharakteristik und deren unterschiedlich positionierten Magenten 17 angepasst. Im in Fig. 1 schematisch dargestellten Beispiel befinden sich auf der Platine 19 in unterschiedlichen radialen Abständen zur Achse 11 drei Hallsensoren 21, die jedoch in einer Ebene senkrecht zur Zeichenebene seitlich versetzt angeordnet sein können. Selbstverständlich können in dieser Ebene auch mehrere Hallsensoren 21 auf derselben Umfangslinie nebeneinander angeordnet sein.

Durch das Vorsehen einer vordefinierten maximalen Anzahl von Hallsensorpositionen, ist es ohne Austausch der Platine 19 möglich, unterschiedliche Betätigungshebel 9 für unterschiedliche Funktionen einzusetzen.

Die Bewegungscharakteristik eines Betätigungshebels 9 hängt dabei von dem Zusammenspiel einer Rastkurve 15 und dem Rastelement 13 sowie von möglichen mechanischen Anschlägen ab. Hierbei istjeweils ein Teil der zusammenwirkenden Teile ortsfest im Gehäuse 3 und das dazu komplementäre Teil am Kopf 7 des Betätigungshebels 9 angeordnet.

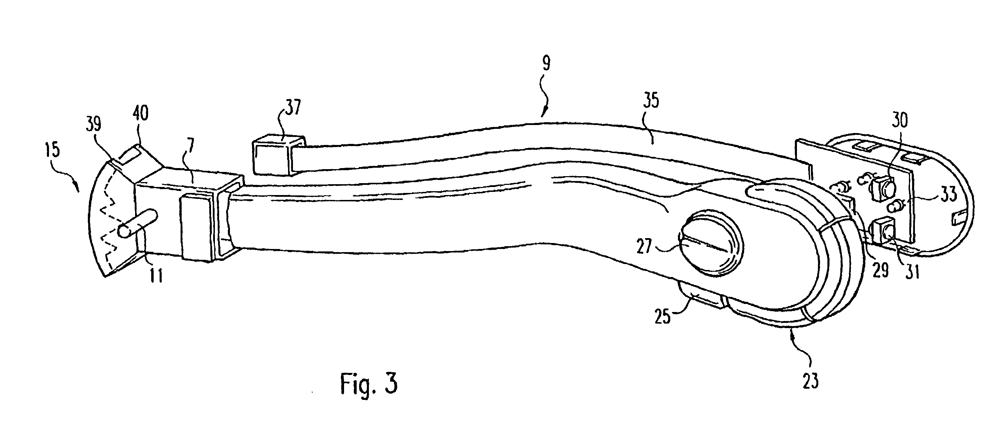

In Fig. 1 befinden sich schematisch dargestellt beispielweise das Rastelement 13 am Kopf 7 des Betätigungshebels 9 und das hierzu komplementäre Teil, nämlich die konkave Rastkurve 15 ortsfest im Inneren des Gehäuses 3. Selbstverständlich ist auch die kinematische Umkehr möglich, wobei dann das Rastelement 13 im Inneren des Gehäuses 3 angeordnet ist und die Rastkurve 15 konvex an der Stirnseite des Kopfes 7 des Betätigungshebels 9 (Ausführungsform nach Fig. 3) ausgebildet ist.

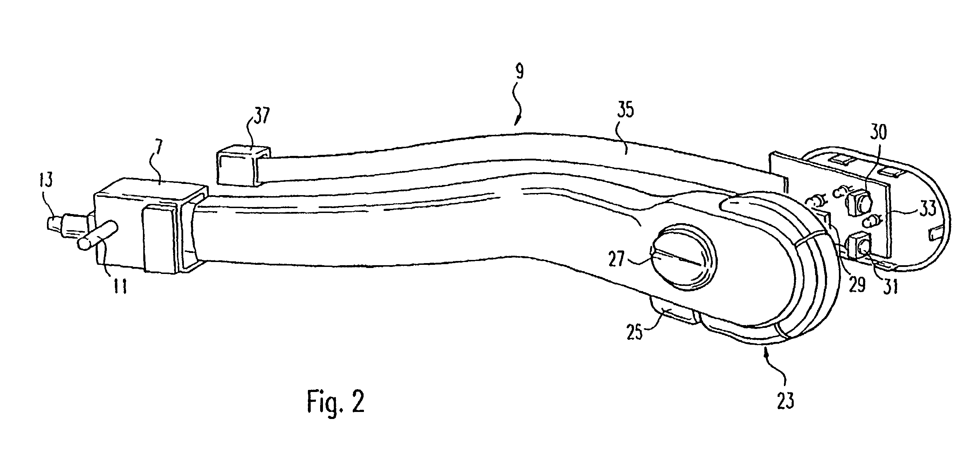

Fig. 2 zeigt in einer Explosionszeichnung den Betätigungshebel 9 als nicht montiertes Einzelteil. Das dem Kopf 7 gegenüber liegenden Ende des Betätigungshebels 9 ist als verbreiterter Griffbereich 23 ausgebildet, an dem Betätigungselemente angeordnet sein können. In Fig. 2 sind beispielsweise an der Unterseite des Griffsbereiches 23 ein Druckschalter 25 und an der Vorderseite ein Kippschalter 27 angeordnet.

Durch Betätigung des Druckschalters 25 werden über eine nicht dargestellte Mechanik ein Kontakt 29 und durch den Kippschalter 27 Kontakte 30 und 31 geschlossen und geöffnet. Diese Kontakte 29, 30, 31 befinden sich hierfür auf einer im Inneren des Griffbereichs 23 des Betätigungshebels 9 angeordneten Platine 33.

Die Kontakt 29, 30, 31 sind über eine Verbindungsleitung 35, die im Inneren des Betätigungshebels 9 verläuft, mit einem Stecker 37 bzw. dessen nicht dargestellte Kontaktstifte elektrisch verbunden.

Bei der Montage der Lenkstockschalteinheit 1 wird dieser Stecker 37 in eine auf der Platine 19 befindliche oder mit dieser verbundene Anschlußeinrichtung eingesteckt. Die in Fig. 1 nicht dargestellte Anschlusseinrichtung kann beispielsweise als Universalkupplung ausgebildet sein, wobei sie bereits alle Kontakte für die unterschiedlichsten Hebeltypen vorrätig hält. Der hierzu komplemetäre Stecker 37 kann dann in seinen Außenmaßen exakt den Innenmaßen der Anschlusseinrichtung entsprechen, so dass ein die Montage vereinfachender genormter Anschluss gewährleistet ist. In diesem Fall weisen die unterschiedlichen Betätigungshebeltypen Stecker 37 gleicher Abmessungen auf, wobei dann nicht alle Kontaktstifte belegt sind odervorhanden sein müssen. Es ist aber auch denkbar die Anschlusseinrichtung in Form von mehreren Anschlusskupplungen auszubilden, wobei dann je nachdem in welche Anschlusskupplung der Stecker 37 eingesteckt wird ein anderer Funktionsumfang ausgewählt werden kann.

Der in Fig. 3 dargestellte erfindungsgemäße Betätigungshebel 9 zeigt den Kopf 7 des Betätigungshebels 9 stirnseitig als konvexe Rastkurve 15 ausgebildet. Selbstverständlich muss dann, wie oben beschrieben, das Rastelement 13 entsprechend im Inneren des Gehäuses 3 angeordnet sein. Die Rastkurve 15 weist zwei Seitenwände 39, 40 auf, die im Zusammenspiel mit dem Rastelement 13 eine Bewegung quer zur Radialbewegung entlang der Rastkurve 15 verhindern. Ein derartiger Hebel mit als Anschlag dienenden Seitenwänden 39, 40 könnte beispielsweise als Scheibenwischerbetätigungshebel in Fahrzeugen ohne Heckscheibenwischer Verwendung finden und auf diese Weise unerwünschte mechanische Leerpositionen vermeiden. Weiterhin können Unter- und Oberseite des Kopfes 7 des Betätigungshebels 9 in Zusammenwirken mit hierzu komplementären Teilen in oder am Gehäuse 3 als Anschlag zur Begrenzung des Hebelweges entlang der Rastkurve 15 dienen.

Auf der Platine 19 (in Fig. 1) kann sich in nicht dargestellter Weise auch eine Elektronik befinden, die nicht nur die einzelnen Kontaktzustände und Hallsensorwerte weiterleitet, sondern diese auch auswertet, verknüpft und verarbeitet. So ist es beispielsweise denkbar, dass am Griffbereich 23 angeordnete Schalter analoge Signale in Form von unterschiedlichen Widerstandswerten übermitteln, die erst mittels elektronischer Logik in Steuersignal umgesetzt werden müssen. Die genaue Funktionsauswahl einer derartigen Auswerteeinheit, welche die maximale Anzahl von benötigten Funktionen bzw. Signalverarbeitungen grundsätzlich zur Verfügung stellt, kann dann wiederum je nach eingesetzem Hebeltyp ausgewählt werden. Beipielsweise ist es denkbar, auf der Platine 35 im Betätigungshebel 9 eine Schaltung anzubringen, die auch über die Verbindungsleitung 35 mit der Elektronik auf Platine 19 in Verbindung steht. Auf diese Art könnte ein bestimmter Hebeltyp elektronisch erkannt werden und zusätzlich zur unterschiedlichen Kontaktbelegung und mechanischer Bewegungscharakteristikauch den Funktionsumfang bzw. die Signalverarbeitung beeinflussen.

## Patentansprüche

1. Lenkstockschalteinheit (1) mit einem Gehäuse (3), in welchem zumindest ein Betätigungshebel (9) schwenk- und/oder verschiebbar gehalten ist,
wobei
der bei der Montage einsetzbare Betätigungshebel (9) eine Kontakteinrichtung aufweist, und
die Lenkstockschalteinheit (1) im Gehäuse (3) zur Kontaktierung der Kontakteinrichtung eine entsprechende Gegenkontakteinrichtung mit einer vordefinierten maximalen Anzahl von Schaltfunktionen aufweist, wobei die benützte Auswahl von Schaltfunktionen abhängig vom Typ des montierbaren Betätigungshebels und dessen Kontakteinrichtung ist,
**dadurch gekennzeichnet,**
**dass** der Betätigungshebel (9) an seinem in dem Gehäuse (3) montierbaren Ende eine Rastkurve (15) aufweist, die mit einem in dem Gehäuse (3) anordenbaren Rastelement (13) zusammenwirkt.

2. Lenkstockschalteinheit (1) nach Anspruch 1, **dadurch gekennzeichnet, dass** der Betätigungshebel (9) an seinem in dem Gehäuse (3) montierbaren Ende wenigstens einen Anschlag aufweist, der die Bewegung des im Gehäuse (3) angeordneten Rastelements (13) entlang einer Rastkurve (15) auf einen vordefinierbaren Bereich und/oder gegen eine Bewegung quer zur Rastkurve (15) begrenzt.

3. Lenkstockschalteinheit (1) nach einem der vorhergehenden Ansprüche, **dadurch gekennzeichnet, dass** der Betätigungshebel (9) vorzugsweise an seinem Endbereich eine Schalteinrichtung aufweist, die über eine Verbindungsleitung (35) und einen entsprechenden Stecker (37) mit einer Anschlusseinrichtung mit vordefinierter maximaler Anzahl von Anschlüssen im Gehäuse (3) verbunden ist.

4. Lenkstockschalteinheit (1) nach einem der vorhergehenden Ansprüche, **dadurch gekennzeichnet, dass** die Kontakteinrichtung und die Gegenkontakteinrichtung als elektromechanischer und/oder elektrischer Kontakt ausgebildet sind.

5. Lenkstockschalteinheit (1) nach Anspruch 4, **dadurch gekennzeichnet, dass** die elektrische Kontakteinrichtung als mindestens ein Magnet (17) und die Gegenkontakteinrichtung als mindestens ein Hallsensor (21) ausgebildet sind.

6. Lenkstockschalteinheit (1) nach einem der vorhergehenden Ansprüche, **dadurch gekennzeichnet, dass** die Lenkstockschalteinheit (1) im Gehäuse (3) eine Auswerteeinheit mit vordefiniertem maximalen Funktionsumfang zur Umsetzung der Signale der Kontakte und/oder Schalteinrichtung in Steuersignale für entsprechende Fahrzeugfunktionen umfasst.

7. Lenkstockschalteinheit (1) nach Anspruch 6, **dadurch gekennzeichnet, dass** die Auswerteeinheit fest verdrahtet aufgebaut ist.

8. Lenkstockschalteinheit (1) nach Anspruch 6, **dadurch gekennzeichnet, dass** die Auswerteeinheit als elektronische Logiksteuerung mit Firmware ausgebildet ist.

9. Lenkstockschalteinheit (1) nach einem der Ansprüche 6 bis 8, **dadurch gekennzeichnet, dass** eine Auswahl des Funktionsumfangs der Auswerteeinheit mittels einer an dem im Gehäuse (3) montierbaren Ende des Betätigungshebels (9) angeordneten Kennung und einer entsprechend im Gehäuse angeordneten Kenneinrichtung in Abhängigkeit von dem jeweils montierten Betätigungshebel (9) steht.

10. Lenkstockschalteinheit (1) nach Anspruch 9, **dadurch gekennzeichnet, dass** die Kennung und die Kenneinrichtung als mechanischer, elektrischer oder elektronischer Kontakt und entsprechender Gegenkontakt ausgebildet sind.

11. Lenkstockschalteinheit (1) nach Anspruch 9, **dadurch gekennzeichnet, dass** die Kennung als elektronischer Chip und die Kenneinrichtung als elektronische Abtasteinrichtung ausgebildet sind.

## Claims

1. Steering shaft switching unit (1) having a housing (3) in which at least one actuation lever (9) is secured in a pivotable and/or slideable fashion, wherein the actuation lever (9) which can be inserted during assembly has a contact device, and the steering shaft switching unit (1) has, for the purpose of making contact with the contact device, an appropriate corresponding contact device with a predefined maximum number of switching functions in the housing (3), the selection of switching functions which is used being dependent on the type of mountable actuation lever and its contact device,
**characterized in that** the actuation lever (9) has, at its end which can be mounted in the housing (3), a latching cam (15) which interacts with a latching element (13) which can be arranged in the housing (3).

2. Steering shaft switching unit (1) according to Claim 1, **characterized in that** the actuation lever (9) has, at its end which can be mounted in the housing (3), at least one stop which restricts the movement of the latching element (13), which is arranged in the housing (3), along a latching cam (15) to a predefinable range and/or restricts against a movement transverse with respect to the latching cam (15).

3. Steering shaft switching unit (1) according to one of the preceding claims, **characterized in that** the actuation lever (9) preferably has at its end region a switching unit which is connected via a connecting line (35) and a corresponding plug (37) to a connecting device with a predefined maximum number of terminals in the housing (3).

4. Steering shaft switching unit (1) according to one of the preceding claims, **characterized in that** the contact device and the corresponding contact device are embodied as electromechanical and/or electrical contacts.

5. Steering shaft switching unit (1) according to Claim 4, **characterized in that** the electrical contact device is embodied as at least one magnet (17), and the corresponding contact device is embodied as at least one Hall sensor (21).

6. Steering shaft switching unit (1) according to one of the preceding claims, **characterized in that** the steering shaft switching unit (1) in the housing (3) comprises an evaluation unit with a predefined maximum functional scope for converting the signals of the contacts and/or switching device into control signals for corresponding vehicle functions.

7. Steering shaft switching unit (1) according to Claim 6, **characterized in that** the evaluation unit is of hard-wired design.

8. Steering shaft switching unit (1) according to Claim 6, **characterized in that** the evaluation unit is embodied as an electronic logic controller with firmware.

9. Steering shaft switching unit (1) according to one of Claims 6 to 8, **characterized in that** a selection of functional scope of the evaluation unit by means of an identifier arranged on the end, which can be mounted in the housing (3), of the actuation lever (9) and an identifying device which is correspondingly arranged in the housing is dependent on the respectively mounted actuation lever (9).

10. Steering shaft switching unit (1) according to Claim 9, **characterized in that** the identifier and the identifying device are embodied as mechanical, electrical or electronic contacts and an appropriate corresponding contact.

11. Steering shaft switching unit (1) according to Claim 9, **characterized in that** the identifier is embodied as an electronic chip and the identifying device as an electronic scanning device.

## Revendications

1. Unité de commutation de colonne de direction (1), comportant un boîtier (3) dans lequel est disposé au moins un levier d'actionnement (9) mobile en basculement et/ou en translation,
dans laquelle,
le levier d'actionnement (9) à insérer lors du montage comprend un dispositif contacteur, et
l'unité de commutation de colonne de direction (1) comprend dans le boîtier (3), pour la mise en contact du dispositif contacteur, un dispositif contacteur antagoniste correspondant présentant un nombre maximal prédéfini de fonctions de commutation, la sélection effectuée parmi les fonctions de commutation étant dépendante du type du levier d'actionnement à monter et de son dispositif contacteur,
**caractérisée en ce que**,
le levier d'actionnement (9) comprend, à son extrémité à monter dans le boîtier (3), une came d'enclenchement (15), qui coopère avec un élément d'enclenchement (13) pouvant être disposé dans le logement (3).

2. Unité de commutation de colonne (1) selon la revendication (1) **caractérisée en ce que** le levier d'actionnement (9), comprend sur son extrémité pouvant être montée dans le boîtier (3) au moins une butée qui limite le mouvement de la came d'enclenchement (13) disposée dans le boîtier (3) le long d'une came d'enclenchement (15).
à une zone prédéfinie et/ou à l'encontre d'un mouvement perpendiculairement à la came d'enclenchement (15)

3. Unité de commutation de colonne de direction (1) selon l'une quelconque des revendications précédentes, **caractérisée en ce que** le levier d'actionnement (9) comprend, de préférence dans sa zone d'extrémité, un dispositif de commutation qui est connecté, via une ligne de connexion (35) et via un connecteur correspondant (37), à un dispositif de raccordement comportant un nombre maximal prédéfini de bornes dans le boîtier (3).

4. Unité de commutation de colonne de direction (1) selon l'une quelconque des revendications précédentes, **caractérisée en ce que** le dispositif contacteur et le dispositif contacteur antagoniste sont réalisés sous la forme d'un contact électromécanique et/ou électrique.

5. Unité de commutation de colonne de direction (1) selon la revendication 6, **caractérisée en ce que** le dispositif contacteur électrique est réalisé sous la forme d'au moins un aimant (17), et le dispositif contacteur antagoniste est réalisé sous la forme d'au moins un capteur à effet Hall (21).

6. Unité de commutation de colonne de direction (1) selon l'une quelconque des revendications précédentes, **caractérisée en ce que** l'unité de commutation de colonne de direction (1) comprend, dans le boîtier (3) une unité d'exploit avec une panoplie maximale prédéfinie de fonctions, pour convertir les signaux des contacts et/ou du dispositif de commutation en signaux de commande pour des fonctions correspondantes du véhicule.

7. Unité de commutation de colonne de direction (1) selon la revendication 6, **caractérisée en ce que** l'unité d'exploitation est conçue sous forme de circuit câblé.

8. Unité de commutation de colonne de direction (1) selon la revendication 6, **caractérisée en ce que** l'unité d'évaluation est réalisée sous la forme d'une commande logique électronique avec des microprogrammes (firmware).

9. Unité de commutation de colonne de direction (1) selon l'une quelconque des revendications 6 à 8, **caractérisée en ce qu'**une sélection de la panoplie des fonctions de l'unité d'exploitation est déterminée, en fonction du levier d'actionnement respectif monté (9), au moyen d'une identification disposée à l'extrémité du levier d'actionnement (9) à monter dans le boîtier (3), et au moyen d'un dispositif d'identification agencé en correspondance dans le boîtier.

10. Unité de commutation de colonne de direction (1) selon la revendication 9, **caractérisée en ce que** l'identification et le dispositif d'identification sont réalisés sous la forme d'un contact mécanique, électrique ou électronique et d'un contact antagoniste correspondant.

11. Unité de commutation de colonne de direction (1) selon la revendication 9, **caractérisée en ce que** l'identification est réalisée sous la forme d'une puce électronique et le dispositif d'identification est réalisé sous la forme d'un dispositif de détection électronique.
